# EUROPÄISCHE PATENTANMELDUNG

(11) **EP 1 285 739 A2**
(43) Veröffentlichungstag der Anmeldung: **26.02.2003**
(21) Anmeldenummer: 02014685.8
(22) Anmeldetag: 03.07.2002
(51) Int. Cl.: B29C 45/68, B29C 45/66

(54) **Schliesseinrichtung für eine Spritzgiessmaschine oder Presse**

(30) Priorität: 23.08.2001 DE 10141277
(71) Anmelder: Demag Ergotech GmbH, 90571 Schwaig (DE)
(72) Erfinder: Armbrüster, Manfred, 90571 Schwaig (DE)
(74) Vertreter: Wilhelm, Ludwig Dipl.-Ing., Patentanwalt

(57) **Zusammenfassung**

Die Erfindung geht aus von einer Schließeinrichtung (1, 101) für eine Spritzgießmaschine oder Presse mit mindestens einer Antriebseinheit (2, 102) und mindestens einem Kniehebelmechanismus (4, 104), wobei die Antriebseinheit (2, 102) mit mindestens einem Pleuel (5, 105) des Kniehebelmechanismusses (4, 104) über einen zusätzlichen Gelenkpunkt (12, 112) auf diesem Pleuel (5, 105) verbunden ist.

Es wird zum einem vorgeschlagen, dass die Summe der Abstände des zusätzlichen Gelenkpunkts (12, 112) von den Pleuelgelenkpunkten (7, 107, 13, 113) größer ist als das 1,2 fache des Abstandes der Pleuelgelenkpunkte (7, 107, 13, 113) zueinander, zum anderen, dass ein weiteres Pleuelpaar (15, 16) gelenkig mit der Antriebseinheit (2) verbunden ist.

## Beschreibung

Die Erfindung betrifft eine Schließeinrichtung gemäß dem Oberbegriff von Patentanspruch 1.

Aus der DE 42 30 348 C2 und der DE 43 13 472 C2 sind Schließeinrichtungen für Spritzgießmaschinen bekannt, bei denen - vereinfacht dargestellt - ein Y-förmiger Kniehebelmechanismus zwischen einer Endplatte und einer beweglichen Werkzeugaufspannplatte die letztere bewegt. Dazu greift am mittleren Gelenk des Kniehebelmechanismusses die Kolbenstange einer hydraulischen Kolben-Zylindereinheit an. Zwei Arme verbinden den Zylinder der hydraulischen Kolben-Zylindereinheit mit den äußeren Gelenken des Kniehebelmechanismusses. Die Kolben-Zylindereinheit ist quer zur Bewegungsrichtung der beweglichen Werkzeugaufspannplatte angeordnet. Die Kolben-Zylindereinheit arbeitet zwischen dem mittleren Gelenk des Kniehebelmechanismusses und den an den äußeren Gelenken angebrachten Armen. Ist der Kolben in den Zylinder eingefahren, so bilden die beiden Pleuel des Kniehebelmechanismusses ein steiles "V", zusammen mit dem Kolben ergibt sich die Form eines "Y". Die beiden äußeren Gelenke des Kniehebelmechanismusses sind nahe zusammengefahren, die bewegliche Werkzeugaufspannplatte ist zurückgezogen, und damit ist die Schließeinrichtung der Spritzgießmaschine offen. Wird der Kolben aus dem Zylinder ausgefahren, wird das mittlere Gelenk des Kniehebelmechanismus von den Anlenkpunkten der Arme am Zylinder entfernt. Die "V"-Form der Pleuel des Kniehebelmechanismusses wird zunehmend flacher bis beide Pleuel auf einer Linie liegen. Die bewegliche Werkzeugaufspannplatte wird damit in Schließrichtung verschoben.

Diese quer zur Schließrichtung angeordnete Kolben-Zylindereinheit beinhaltet den Nachteil, einen großen Bauraum quer zur Längsachse der Spritzgießmaschine zu benötigen. Beim Öffnen der Schließeinrichtung fährt der Zylinder einen weiten Weg senkrecht zur Längsachse der Spritzgießmaschine nach unten. Ein weiterer Nachteil ist in der Kräfteverteilung begründet. Beim Schließvorgang schiebt der Kolben den mittleren Gelenkpunkt des Kniehebelmechanismusses nach oben und damit verschiebt er die Pleuel nach oben und drückt sie gleichzeitig nach außen. Der Kraft des Kolbens wirkt eine zur Schließrichtung senkrechte Kraftkomponente in den Armen als Resultierende entgegen, d. h. die Arme werden auf Zug beansprucht. Die Schließkraft der Schließeinrichtung ergibt sich aus der Überlagerung der horizontalen Kraftkomponenten der Druckkraft der Pleuel und der Zugkraft der Arme. Da Pleuel und Arme einander entgegenwirken, müssen sie stärker dimensioniert werden.

In dem Fachbuch "Kunststoff Maschinen Führer", 3. Ausgabe, herausgegeben von Dr.-lng. Friedrich Johannaber, Carl Hanser Verlag München Wien 1992, ISBN 3-446-16292-5 ist auf Seite 95, Bild 43 eine eingelenkige Kniehebelschließeinheit mit fünf Drehpunkten beschrieben. Nachteilig an dieser Maschine ist, dass der koaxial angeordnete Hydraulikzylinder einen hohen axialen Bauraum benötigt.

Der Erfindung liegt die Aufgabe zugrunde, eine gattungsgemäße Schließeinrichtung zu schaffen, die einen geringen vertikalen und axialen Bauraum benötigt und eine günstige Krafteinleitung aufweist.

Diese Aufgabe wird gelöst durch die Merkmale der Ansprüche 1 und 2.

Vorteilhafte Ausgestaltungen der Erfindung ergeben sich aus den Unteransprüchen.

Die erfindungsgemäße Schließeinrichtung für eine Spritzgießmaschine oder Presse zeichnet sich durch einen zusätzlichen Gelenkpunkt auf mindestens einem Pleuel des Kniehebelmechanismusses aus, der mit den beiden anderen, dem Kniehebelmechanismus zugehörigen Gelenkpunkten dieses Pleuels ein Dreieck mit einer nicht verschwindenden Triangularität bildet. Die Anlenkung der Antriebseinheit an diesem zusätzlichen Gelenkpunkt bringt den Vorteil einer günstigen Krafteinleitung mit sich. Es können auch beide Pleuel des Kniehebelmechanismusses dreieckig mit jeweils einem zusätzlichen Gelenkpunkt ausgestattet sein und dabei der Antriebsmechanismus zwischen diesen beiden zusätzlichen Gelenkpunkten angelenkt sein. Beide Ausgestaltungen bieten den Vorteil, den Antriebsmechanismus in Längsrichtung der Spritzgießmaschine oder Presse anzuordnen. Diese Anordnung spart sowohl vertikalen Bauraum als auch horizontalen Bauraum, da die Unterbringung des Antriebsmechanismusses die axiale Ausdehnung des Kniehebelmechanismusses ausnutzt.

In einer Variante der Erfindung ist ein weiteres Pleuelpaar gelenkig mit der Antriebseinheit verbunden. Dies bietet den Vorteil, die Antriebseinheit im Wesentlichen waagrecht, d. h. längs zur Schließrichtung anzuordnen. Die Antriebseinheit arbeitet zwischen dem zusätzlichen Gelenkpunkt auf einem der beiden Pleuel des Kniehebelmechanismusses und einem Gelenkpunkt, der das weitere Pleuelpaar miteinander verbindet. Das weitere Pleuelpaar ist an den gleichen Gelenkpunkten wie die Pleuel des Kniehebelmechanismusses angelenkt. Wird die Antriebseinheit, beispielsweise ein Spindelantrieb mit Hohlwellenmotor oder ein Linearantrieb oder ein doppelwirkender Hydraulikzylinder, ausgefahren, so wird das Pleuelpaar des Kniehebelmechanismusses gestreckt. Das weitere Pleuelpaar wird von einem schmalen "V" zu einem breiten "V" geöffnet. Als erheblicher Vorteil gegenüber dem Stand der Technik nach DE 42 30 348 C2 und der DE 43 13 472 C2 erweist sich, dass die Horizontalkomponenten der Kräfte von den Kniehebelpleueln und den Pleueln des weiteren Pleuelpaars beim Schließen der Schließeinrichtung in die selbe Richtung wirken. Ein weiterer Vorteil besteht darin, daß die Antriebseinheit beim Öffnen und Schließen der Schließeinrichtung nur in geringem Maße hauptsächlich parallel zur Längsachse der Schließeinheit versetzt wird. Weiterhin nutzen die Pleuelpaare beim Öffnen der Formschließeinheit den vorhandenen Platz in beiden Richtungen senkrecht zur Längsachse der Schließeinheit. Der beanspruchte Bauraum ist daher im Vergleich zum Stand der Technik klein. Der Kniehebelmechanismus kann sowohl drückend in einer Drei-Platten-Anordnung einer Spritzgießmaschine zwischen Endplatte und beweglicher Werkzeugaufspannplatte als auch ziehend in einer Zwei-Platten-Anordnung zwischen fester und beweglicher Werkzeugaufspannplatte arbeiten. Die Drei-Platten-Anordnung ermöglicht eine günstige zentrale Krafteinleitung in die bewegliche Werkzeugaufspannplatte über ein zentrales Kniehebelsystem. Die Zwei-Platten-Anordnung birgt den Vorteil einer kürzeren axialen Baulänge in sich.

In einer hierzu alternativen Ausführungsform der Erfindung ist die Antriebseinheit mit einem Anlenkpunkt fest mit dem Maschinenbett der Spritzgießmaschine bzw. Presse oder einem damit fest verbundenen Bauteil verbunden. Zwar müssen bei dieser Anordnung die durch die Antriebseinheit entstehenden Kräfte im Maschinenbett aufgefangen werden, jedoch ergeben sich aufgrund der Besonderheit eines ortsfesten Kniehebelmechanismusses bei einer Zwei-Platten-Ausführung Vorteile hinsichtlich der geringeren Anzahl verschiedener Bauteile.

In einer vorteilhaften Ausgestaltung der Erfindung sind zwei Kniehebelmechanismen symmetrisch zur Längsmittelachse der Spritzgießmaschine bzw. Presse angeordnet. Dies bietet bei einer Spritzgießmaschine den Vorteil, eine Plastifiziereinheit zwischen den Kniehebelmechanismen anzuordnen, so dass durch die parallele Anordnung von Kniehebelmechanismen und Plastifiziereinheit axialer Bauraum eingespart werden kann. Vorzugsweise sind dabei beide Kniehebelmechanismen über einen Kreuzkopf von einer Antriebseinheit bewegbar.

Unter Betriebsbedingungen, die eine hohe Luftreinheit in dem Arbeitsraum einer Spritzgießmaschine erfordern, beispielsweise im medizintechnischen Bereich, ist die Antriebseinheit vorzugsweise ein Spindelantrieb mit Hohlwellenmotor oder ein Linearantrieb. Verunreinigungen, beispielsweise durch Abriebteilchen von Dichtungen eines Hydrauliksystems, werden auf diese Weise vermieden. Liegen keine besonderen Anforderungen an die Luftreinheit vor, so ist als Antriebseinheit ein doppelwirkender Hydraulikzylinder vorteilhaft.

In Zeichnungen sind Ausführungsbeispiele der Erfindung dargestellt.

Es zeigen:
- Fig. 1: Eine geschlossene Schließeinrichtung für eine Spritzgießmaschine mit einer Kolben-Zylinder-Einheit, die über einen zusätzlichen Gelenkpunkt mit einem Pleuel eines Kniehebelmechanismusses verbunden ist, und deren Kolbenstange mit einem weiteren Pleuelpaar verbunden ist,
- Fig. 2: eine Schließeinrichtung nach Fig. 1 im geöffneten Zustand,
- Fig. 3: eine Variante der erfindungsgemäßen Schließeinrichtung für eine ZweiPlatten-Spritzgießmaschine in einer Seitenansicht
- Fig. 4: eine Schließeinrichtung nach Fig. 3 in einer Ansicht von der Oberseite.

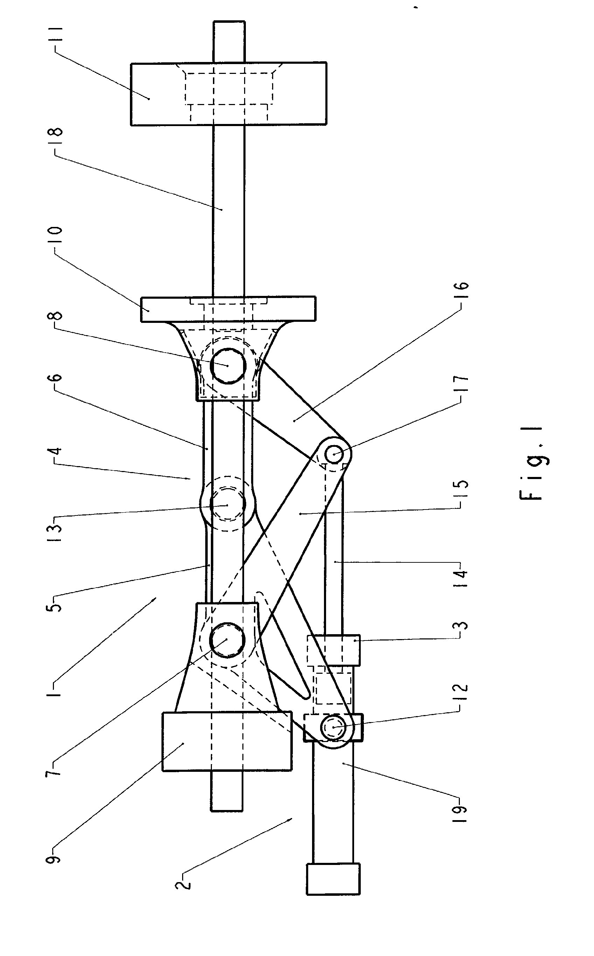

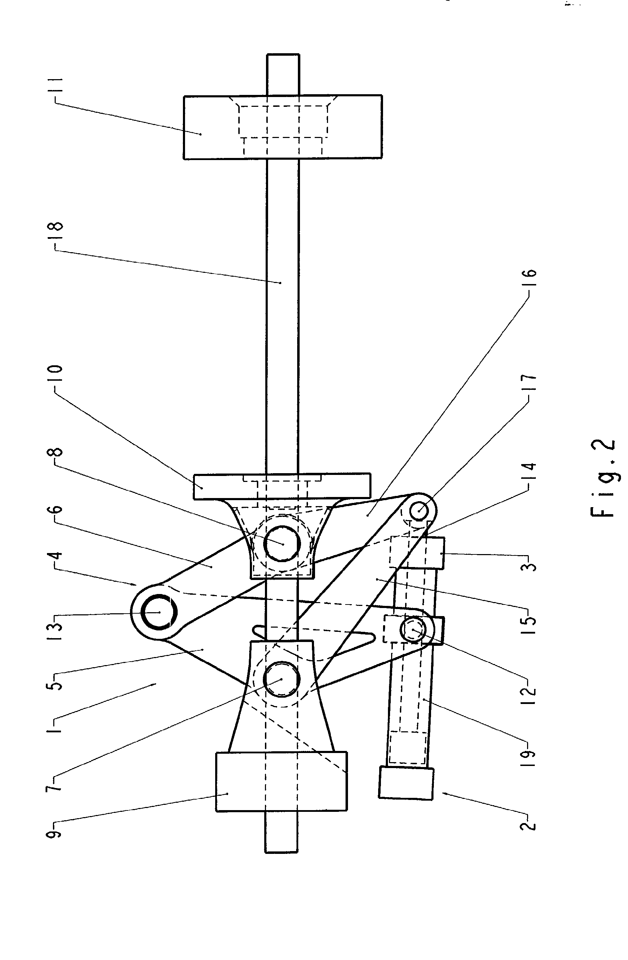

Bei der erfindungsgemäßen Schließeinrichtung 1 für eine Spritzgießmaschine betätigt als Antriebseinheit 2 eine Kolben-Zylinder-Einheit 3 einen Kniehebelmechanismus 4 aus zwei Pleueln 5, 6, die über jeweils einen Gelenkpunkt 7, 8 mit einer schematisch dargestellten Endplatte 9 und einer beweglichen Werkzeugaufspannplatte 10 verbunden sind. Dazu ist das Zylinderrohr 19 über einen zusätzlichen Gelenkpunkt 12 mit einem Pleuel 5 des Kniehebelmechanismusses 4 verbunden. Dieses Pleuel 5 ist dreiecksförmig ausgestaltet. Dabei liegt der zusätzliche Gelenkpunkt 12, an dem das Zylinderrohr 19 angelenkt ist, von dem Gelenkpunkt 7, dem Anlenkpunkt der Endplatte 9, und dem Gelenkpunkt 13, dem Verbindungspunkt der beiden Pleuel 5, 6 des Kniehebelmechanismusses 4, weit ab. Die Kolbenstange 14 der Kolben-Zylinder-Einheit 3 ist gelenkig mit zwei weiteren Pleueln 15, 16 an einem Anlenkpunkt 17 verbunden, die ihrerseits jeweils an Gelenkpunkten 7, 8 mit der Endplatte 9 und der beweglichen Werkzeugaufspannplatte 10 verbunden sind. In Fig. 1 ist die Schließeinrichtung 1 im geschlossenen Zustand dargestellt. Dazu ist die Kolbenstange 14 der Kolben-Zylinder-Einheit 3 voll ausgefahren. Der zusätzliche Gelenkpunkt 12 des Pleuels 5 ist in der Darstellung nach den Figuren 1 und 2 ganz nach links verschoben (Fig. 1), d. h. das dreieckförmige Pleuel 5 ist um seinen Gelenkpunkt 7, an dem es an der Endplatte 9 angelenkt ist, derart gedreht, dass der Gelenkpunkt 13, der Verbindungspunkt der beiden Pleuel 5, 6 des Kniehebelmechanismusses 4 auf der Verbindungslinie der Gelenkpunkte 7 und 8, der Anlenkpunkte von der Endplatte 9 und der beweglichen Werkzeugaufspannplatte 10, liegt. Der Kniehebelmechanismus 4 ist damit voll durchgestreckt, die bewegliche Werkzeugaufspannplatte 10 maximal in Schließrichtung verschoben. Die Schließeinrichung 1 ist damit geschlossen. Der Anlenkpunkt 17 der beiden zusätzlichen Pleuel 15, 16 ist dabei in der Darstellung nach Fig. 1 ganz nach rechts verschoben.

Wird die Schließeinrichtung 1 nun geöffnet, so wird die Kolbenstange 14 der Kolben-Zylinder-Einheit 3 eingefahren. Dadurch wird der zusätzliche Gelenkpunkt 12 des Pleuels 5 in der Darstellung nach den Figuren 1 und 2 nach rechts verschoben (Fig. 2). Das dreieckförmige Pleuel 5 dreht dabei um seinen Gelenkpunkt 7, an dem es an der Endplatte 9 angelenkt ist, derart, dass der Gelenkpunkt 13, der Verbindungspunkt der beiden Pleuel 5, 6 des Kniehebelmechanismusses 4, nach oben verschoben wird. Der Kniehebelmechanismus 4 wird damit zunehmend abgewinkelt. Die bewegliche Werkzeugaufspannplatte 10 wird dabei in der Darstellung nach den Figuren 1 und 2 nach links, d. h. in Öffnungsrichtung gezogen. Die Schließeinrichung 1 öffnet. Der Anlenkpunkt 17 der beiden zusätzlichen Pleuel 15, 16 wird dabei in der Darstellung nach den Figuren 1 und 2 nach links verschoben (Fig. 2). Der Zylinder 3 macht beim Öffnen der Schließeinrichtung 1 eine leichte Nickbewegung. Sein Schwerpunkt wird geringfügig nach unten verschoben. Ein Holm 18 ist axial in einer feststehenden Werkzeugaufspannplatte 11 fixiert. Die Einstellung der Werkzeughöhe kann in bekannter Weise, wie zum Beispiel über ein auf dem Holm 18 befindliches Gewinde im Bereich der Endplatte 9 und einer zugehörigen Verstellmutter - beides nicht dargestellt - realisiert werden.

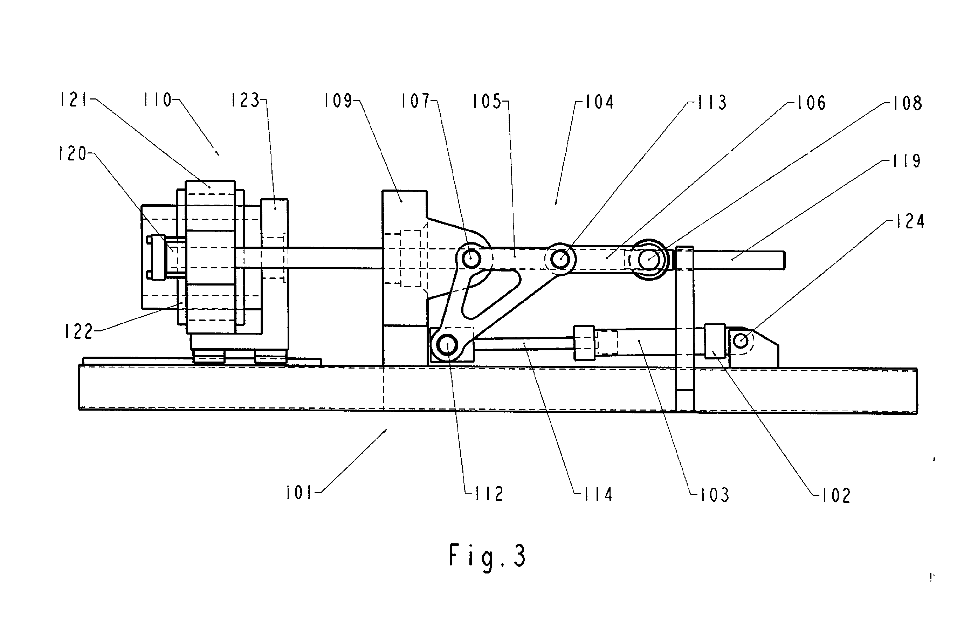

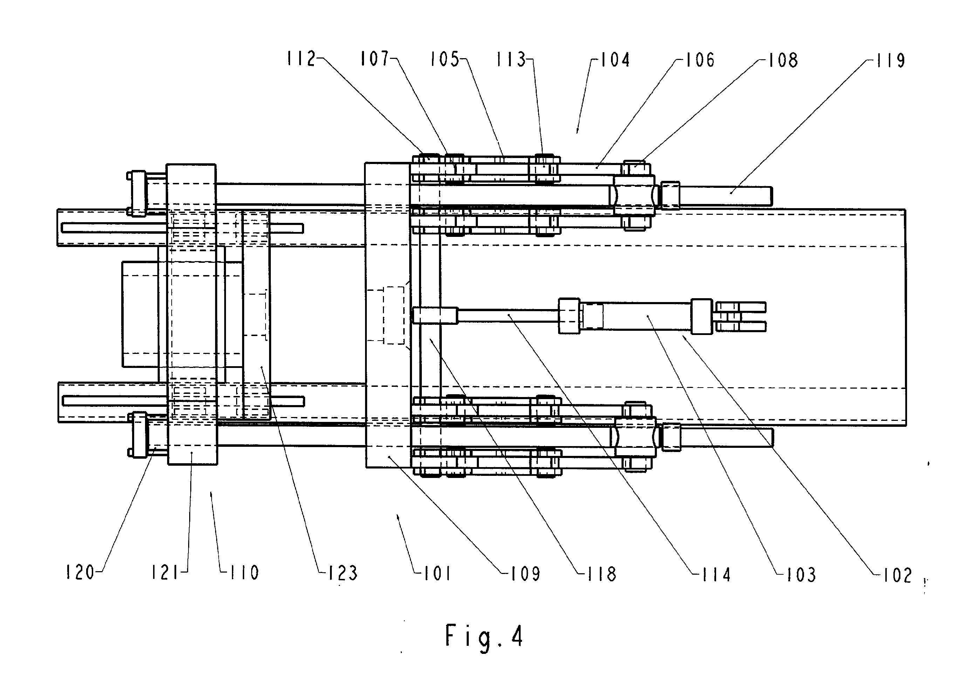

Eine Variante der Erfindung ist in den Figuren 3 und 4 dargestellt. Bei dieser abgewandelten Schließeinrichtung 101 für eine Spritzgießmaschine in Zwei-Platten-Anordnung betätigt als Antriebseinheit 102 eine Kolben-Zylinder-Einheit 103 mit ihrer Kolbenstange 114 über einen Kreuzkopf 118 zwei symmetrisch zur Längsachse angeordnete Kniehebelmechanismen 104. Jeder dieser Kniehebelmechanismen 104 besteht aus zwei Pleueln 105, 106, die über jeweils einen Gelenkpunkt 107, 108 mit einer feststehenden Werkzeugaufspannplatte 109 und einem Holm 119 verbunden sind. Der Holm 119 taucht durch die feststehende Werkzeugaufspannplatte 109 durch und ist über eine Mutter 120 mit einer Grundplatte 121 einer beweglichen Werkzeugaufspannplatte 110 verbunden. Mit dieser Grundplatte 121 ist über eine Stellmutter 122 eine Frontplatte 123 zur Aufnahme eines nicht dargestellten Werkzeugs verbunden. Mit der Stellmutter 122 kann die Schließeinrichtung 101 an die Größe des Werkzeugs angepasst werden. Die Kolben-Zylinder-Einheit 103 bewegt damit mit ihrer Kolbenstange 114 mittelbar die bewegliche Werkzeugaufspannplatte 110. Dazu ist jeweils eine Seite des Kreuzkopfs 118 über einen zusätzlichen Gelenkpunkt 112 mit einem Pleuel 105 des Kniehebelmechanismusses 104 verbunden. Dieses Pleuel 105 ist dreiecksförmig ausgestaltet. Dabei liegt der Gelenkpunkt 112, an dem der Kreuzkopf 118 angelenkt ist, von dem Gelenkpunkt 107, dem Anlenkpunkt der feststehenden Werkzeugaufspannplatte 109, und dem Gelenkpunkt 113, dem Verbindungspunkt der beiden Pleuel 105, 106 des Kniehebelmechanismusses 104, weit ab. Die Kolben-Zylinder-Einheit 103 ist gelenkig mit dem Maschinenbett der Spritzgießmaschine verbunden.

In den Figuren 3 und 4 ist die Schließeinrichtung 101 im geschlossenen Zustand dargestellt. Dazu ist die Kolbenstange 114 der Kolben-Zylinder-Einheit 103 voll ausgefahren. Der zusätzliche Gelenkpunkt 112 des Pleuels 105 ist in der Darstellung nach den Figuren 3 und 4 ganz nach links verschoben, d. h. das dreieckförmige Pleuel 105 ist um seinen Gelenkpunkt 107, an dem es an der feststehenden Werkzeugaufspannplatte 109 angelenkt ist, derart gedreht, dass der Gelenkpunkt 113, der Verbindungspunkt der beiden Pleuel 105, 106 des Kniehebelmechanismusses 104 auf der Verbindungslinie der Gelenkpunkte 107 und 108, der Anlenkpunkte der feststehenden Werkzeugaufspannplatte 109 und des Holms 119, liegt. Der Kniehebelmechanismus 104 ist damit voll durchgestreckt, die bewegliche Werkzeugaufspannplatte 110 maximal in Schließrichtung verschoben. Die Schließeinrichtung 101 ist damit geschlossen. Wird die Schließeinrichtung 101 nun geöffnet, so wird die Kolbenstange 114 der Kolben-Zylinder-Einheit 103 eingefahren. Dadurch wird der zusätzliche Gelenkpunkt 112 des Pleuels 105 in der Darstellung nach den Figuren 3 und 4 nach rechts verschoben. Das dreieckförmige Pleuel 105 dreht dabei um seinen Gelenkpunkt 107, an dem es an der feststehenden Werkzeugaufspannplatte 109 angelenkt ist, derart, dass der Gelenkpunkt 113, der Verbindungspunkt der beiden Pleuel 105, 106 des Kniehebelmechanismusses 104 nach oben verschoben wird. Der Kniehebelmechanismus 104 wird damit zunehmend abgewinkelt. Der Gelenkpunkt 108, an dem der Holm 119 angelenkt ist, wird in der Darstellung nach den Figuren 3 und 4 nach links verschoben. Damit wird der durch die feststehende Werkzeugaufspannplatte 109 durchgeführte Holm 119 nach links geschoben. Die bewegliche Werkzeugaufspannplatte 110 wird dadurch ebenfalls nach links, d. h. in Öffnungsrichtung geschoben. Die Schließeinrichtung 101 öffnet. Die Kolben-Zylinder-Einheit 103 macht beim Öffnen der Schließeinrichtung 101 eine leichte Nickbewegung.

### Schließeinrichtung für eine Spritzgießmaschine oder Presse

### Bezugszeichenliste

- 1: Schließeinrichtung
- 2: Antriebseinheit
- 3: Kolben-Zylinder-Einheit
- 4: Kniehebelmechanismus
- 5: Pleuel
- 6: Pleuel
- 7: Gelenkpunkt
- 8: Gelenkpunkt
- 9: Endplatte
- 10: bewegliche Werkzeugaufspannplatte
- 11: feststehende Werkzeugaufspannplatte
- 12: zusätzlicher Gelenkpunkt
- 13: Gelenkpunkt
- 14: Kolbenstange
- 15: Pleuel
- 16: Pleuel
- 17: Anlenkpunkt
- 18: Holm
- 19: Zylinderrohr
- 101: Schließeinrichtung
- 102: Antriebseinheit
- 103: Kolben-Zylinder-Einheit
- 104: Kniehebelmechanismus
- 105: Pleuel
- 106: Pleuel
- 107: Gelenkpunkt
- 108: Gelenkpunkt an der Holmmutter
- 109: feststehende Werkzeugaufspannplatte
- 110: bewegliche Werkzeugaufspannplatte
- 112: zusätzlicher Gelenkpunkt
- 113: Gelenkpunkt
- 114: Kolbenstange
- 118: Kreuzkopf
- 119: Holm
- 120: Mutter
- 121: Grundplatte
- 122: Stellmutter
- 123: Frontplatte
- 124: Anlenkpunkt

## Patentansprüche

1. Schließeinrichtung (1, 101) für eine Spritzgießmaschine oder Presse mit mindestens einer Antriebseinheit (2, 102) und mindestens einem Kniehebelmechanismus (4, 104), wobei die Antriebseinheit (2, 102) mit mindestens einem Pleuel (5, 105) des Kniehebelmechanismusses (4, 104) über einen zusätzlichen Gelenkpunkt (12, 112) auf diesem Pleuel (5, 105) verbunden ist, **dadurch gekennzeichnet, dass** die Summe der Abstände des zusätzlichen Gelenkpunkts (12, 112) von den Pleuelgelenkpunkten (7, 107, 13, 113) größer ist als das 1,2 fache des Abstandes der Pleuelgelenkpunkte (7, 107, 13, 113) zueinander.

2. Schließeinrichtung (1) nach dem Oberbegriff von Anspruch 1, **dadurch gekennzeichnet, dass** ein weiteres Pleuelpaar (15, 16) gelenkig mit der Antriebseinheit (2) verbunden ist.

3. Schließeinrichtung (101) nach Anspruch 1, **dadurch gekennzeichnet, dass** die Antriebseinheit (102) mit einem Anlenkpunkt (124) fest mit dem Maschinenbett der Spritzgießmaschine bzw. Presse oder einem damit fest verbundenen Bauteil verbunden ist.

4. Schließeinrichtung (101) nach einem der vorstehenden Ansprüche, **dadurch gekennzeichnet, dass** der Kniehebelmechanismus (4) zwischen einer Endplatte (9) und einer beweglichen Werkzeugaufspannplatte (10) einer Spritzgießmaschine wirksam ist.

5. Schließeinrichtung (1) nach einem der vorstehenden Ansprüche 1 bis 3, **dadurch gekennzeichnet, dass** der Kniehebelmechanismus (104) zwischen einer beweglichen (110) und einer feststehenden Werkzeugaufspannplatte (109) einer Spritzgießmaschine wirksam ist.

6. Schließeinrichtung (1, 101) nach einem der vorstehenden Ansprüche, **dadurch gekennzeichnet, dass** die Antriebseinheit (2, 102) im wesentlichen längs zur Schließrichtung angeordnet ist.

7. Schließeinrichtung (1, 101) nach einem der vorstehenden Ansprüche, **dadurch gekennzeichnet, dass** zwei Kniehebelmechanismen (4, 104) symmetrisch zur Längsmittelachse der Spritzgießmaschine bzw. Presse angeordnet sind.

8. Schließeinrichtung (1, 101) nach Anspruch 7, **dadurch gekennzeichnet, dass** die beiden Kniehebelmechanismen (4, 104) über einen Kreuzkopf (118) mittels einer Antriebseinheit (102) bewegbar sind.

9. Schließeinrichtung (1, 101) nach einem der vorstehenden Ansprüche, **dadurch gekennzeichnet, dass** die Antriebseinheit (2, 102) ein Spindelantrieb mit Hohlwellenmotor oder ein Linearantrieb ist.

10. Schließeinrichtung (1, 101) nach einem der vorstehenden Ansprüche, **dadurch gekennzeichnet, dass** die Antriebseinheit (2, 102) ein doppelwirkender Hydraulikzylinder (3, 103) ist.
